(19) **Europäisches Patentamt**
**European Patent Office**
**Office européen des brevets**

(11) **EP 0 721 564 B1**

(12) **EUROPEAN PATENT SPECIFICATION**

(45) Date of publication and mention
of the grant of the patent:
**13.09.2000 Bulletin 2000/37**

(51) Int. Cl.⁷: **G01L 1/14**, G01B 7/16,
G01B 101/50, G01L 9/12

(21) Application number: **94930556.9**

(22) Date of filing: **03.10.1994**

(86) International application number:
**PCT/US94/11184**

(87) International publication number:
**WO 95/10021 (13.04.1995 Gazette 1995/16)**

(54) **HIGH PRECISION SCALE AND POSITION SENSOR**

HOCHPRÄZISIONSWAAGE UND POSITIONSSENSOR

DETECTEUR DE POSITION ET DE POIDS A HAUTE PRECISION

(84) Designated Contracting States:
**CH DE FR GB LI**

(30) Priority: **01.10.1993 US 131405**

(43) Date of publication of application:
**17.07.1996 Bulletin 1996/29**

(73) Proprietor:
**HYSITRON INCORPORATED
Minneapolis, MN 55406 (US)**

(72) Inventor: **BONIN, Wayne, A.
North Oaks, MN 55127 (US)**

(74) Representative:
**Harland, Linda Jane
c/o Reddie & Grose
16 Theobalds Road
London WC1X 8PL (GB)**

(56) References cited:
EP-A- 0 459 939       EP-A- 0 623 824
GB-A- 2 238 429       US-A- 3 307 407
US-A- 3 314 493       US-A- 4 694 687
US-A- 4 970 374       US-A- 5 115 291
US-A- 5 134 886       US-A- 5 174 159

## Description

Technical Field

The present invention relates to high precision force (including weight) and displacement measuring and/or indicating devices. More particularly, it is directed to such devices incorporating a sensor, including a multi-plate capacitor system.

Background of the Invention

Many applications for precise measurement of force, weight, and relative position are known in the art. For example, machine shop tools for precisely indicating or fabricating holes, channels or other surface features relative to one another require accurate position or displacement measurement. Accurate measurement of displacement or position on small parts, such as those used in the manufacture of electronic components is particularly important.

Measurement of force or weight accurately at minute quantities, along with instruments to accomplish such measurements are well known. Strain gauge transducers are one industry recognized instrument for such measurements. These instruments can be used in laboratory analysis, such as micro hardness testing of samples. Furthermore, laboratory scales for measuring constituent components in minute quantities with high resolution are well known in chemical, biological, drug and medical fields.

A known limitation to resolution in strain gauge transducers is the signal to noise ratio of the instrument. Strain gauge transducers have an output of only a few millivolts. It is recognized that the minimal possible noise level for the strain gauge transducer is set by the thermal noise on the strain gauge resistive element. For example, the calculated noise for a commercial strain gauge sensor with 350 Ohm resistance is 2.4 nV at 1 Hz bandwidth.

In more recent years, the development of scanned-probe microscopes has created a need for higher resolution measurement of weight and position at minute levels. As disclosed by Wickramasinghe in "Scanned-Probe Microscopes", Scientific American, October, 1989, pp. 98-105, scanned-probe microscopes allow an examination of a surface at very close range with a probe that may be just a single atom across, and resolve features and properties on a scale that eludes other microscopes.

The disclosure of Wickramasinghe discloses two types of scanned-probe microscopes. The first type is a scanning tunneling microscope, while the second is an atomic force microscope.

In the atomic force microscope, a scanned-probe device moves a minute tip, such as an atomically sharp diamond mounted on a metal foil over a specimen in a raster pattern. The instrument records contours of force, the repulsion generated by the overlap of the electron cloud at the tip with the electron clouds of surface atoms. In effect, the tip, like the stylus of a phonograph, reads the surface. The foil acts as a spring, keeping the tip pressed against the surface as it is jostled up and down by the atomic topography.

In atomic force microscopy, it is recognized that variations in force affect the resolution of the topography of the sample being tested. For example, the thin film of water and other contaminates that inevitably collect on both the tip of the instrument and the sample creates adhesive forces which increase tracking pressure. Thus, it is recognized that accurate monitoring of the force between the tip of the instrument and the sample is critical to the accuracy of the measurements of surface topography.

A scanning tunneling microscope senses atomic-scale topography by means of electrons that tunnel across the gap between a probe and the surface. Piezoelectric ceramics, which change size slightly in response to changes in applied voltage, maneuver the tungsten probe of a scanning tunneling microscope in three dimensions. A voltage is applied to the tip, and is moved toward the surface, which must be conducting or semiconducting, until a tunneling current starts to flow. The tip is then scanned back and forth in a raster pattern. The tunneling current tends to vary with the topography. A feedback mechanism responds by moving the tip up and down, following the surface relief. The tip's movements are translated into an image of the surface.

With scanning tunneling microscopy, it is recognized that measurement of surface topography would be incorrect if the tip distance from the surface is not maintained. Thus, a measurement of the force applied by the tip on the sample throughout the measurement cycle would serve to confirm that such distance is maintained, and provide a cross-check for the accuracy of the topographic measurement.

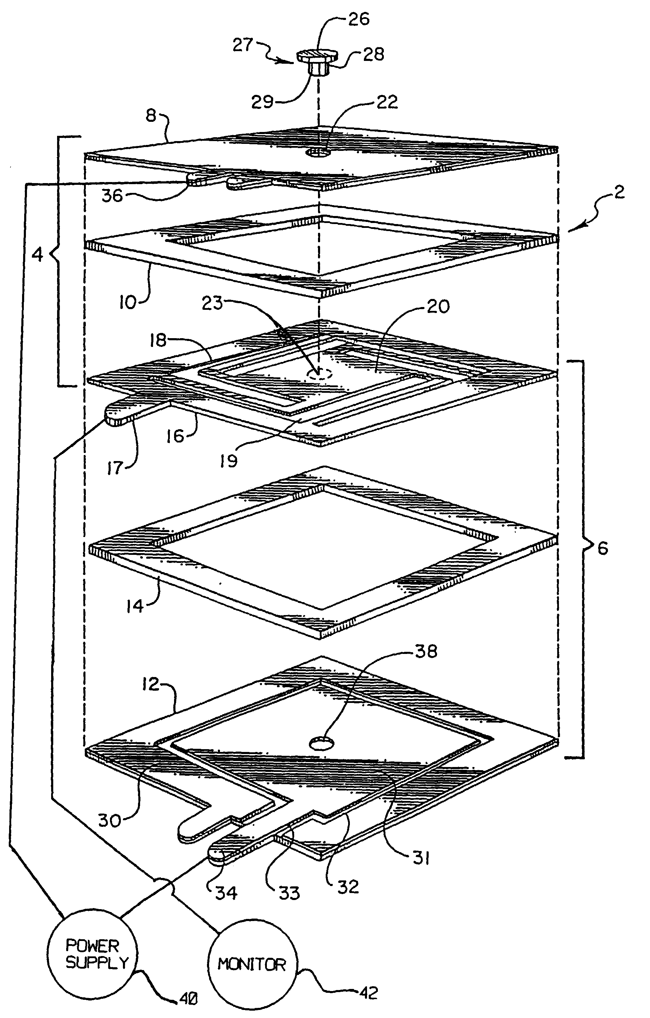

Bonin et al. (U.S. Patent No. 4,694,687) discloses a vehicle performance analyzer which incorporates a capacitive accelerometer for detecting changes in G-forces and for producing a digital count value proportional to such changes. The sensor includes a capacitive transducer comprising a pair of spaced-apart parallel plates disposed on opposite sides of a beam-supported moveable plate, which responds to changes in acceleration of forces. Bonin et al. discloses, in Figure 3, that the beam-supported moveable plate is sealed from access between the spaced-apart parallel plates. Thus, although not physically accessible, the moveable plate will yield and be displaced when subjected to G-forces during acceleration when mounted perpendicular to such force.

Summary of the Invention

The present invention provides a force, weight or position sensor unit and sensor element. The output from the sensor may be converted to a DC signal proportional to the weight, force or relative position of the measured sample. This conversion may be accomplished as generally disclosed by Bonin et al. in U.S. Patent No. 4,694,687, for example.

In a preferred embodiment, the sensor uses a multi-capacitor system having drive and pick-up plates mounted on an appropriate suspension system to provide the desired relative motion when a force is applied to the pick-up plate. The drive plates may be driven with an AC carrier signal in the order of 50 KHz, with the driving signals being 180 degrees out of phase with each other.

The output signal is run through a buffer amplifier of very high input impedance (100 M Ohm-0.3 pF, for example), and then synchronously demodulated to produce a DC signal proportional to force or displacement. The output is positive for one direction of displacement, and negative for the opposite direction.

A sensor element in accordance with the present invention includes a pair of capacitive transducers, each transducer including a separate drive plate and a shared pick-up plate. One of the pair of drive plates includes a hole therethrough centrally disposed on the drive plate. The pick-up plate is positioned between the pair of drive plates and spaced from each drive plate by an insulating spacer. The drive plates include spaced opposing conductive surfaces when the pick-up plate is mounted therebetween. The pick-up plate includes a conductive central plate suspended by a spring means between the drive plates, wherein the central plate is capable of deflection between the conductive surfaces of each of the drive plates.

The sensor element includes means for transmitting force from a point remote from the central plate to the central plate. The means can include a sample holder which is attached to the pick-up plate so that it moves in unison with such plate. Alternatively, any rod or member passed through the hole in one drive plate and in contact with the central plate may transmit force to the pickup plate. The output is actually proportional to the pick-up plate position, but can easily be calibrated to represent force since the sensor may be constructed to have a linear force versus displacement relationship.

In a preferred embodiment, the sample holder is a pedestal having a stem portion which passes through the centrally disposed hole in one drive plate and remains in contact with the surface of the conductive central plate of the pick-up plate. Contact with the central plate is approximately at the center point of the central mass. Thus, the pedestal transmits a force applied to the pedestal to the central plate with resulting deflection of the central plate. A diaphragm seal can be included to prevent dust or other contaminants from entering through the space between the pedestal stem and hole in the drive plate.

The disclosed force sensor is particularly useful in conjunction with scanned-probed microscopes, such as a scanning tunneling microscope or an atomic force microscope.

It is, however, recognized that the sensor may be utilized in any application for measuring weight, force or displacement that requires high resolution of minute measurements. The force sensor of the present invention has a resolution of over 100,000 to 1. The sensor can be of size 13mm (1/2") square and 3.2 mm (1/8") thick, which allows it to be mounted on the sample holder region of an existing scanned-probe microscope. The sample to be subjected to microscopy can then be mounted on top of the sensor. This gives a direct readout of the force applied to the sample by the microscope tip.

A sensor incorporating features of the present invention can also be utilized as a device for measuring ultra-micro hardness of samples with the capability of simultaneous scanning tunneling microscopy or atomic force microscopy imaging. It has been found that sensors of the present invention can readily provide a full scale range of 3 grams with resolution to 30 micrograms.

The signal to noise ratio of the sensors of the present invention are much higher than those calculated for existing strain gauge transducers. As previously stated, the minimum possible noise level for a strain gauge transducer is set by the thermal noise of the strain gauge element. In contrast, the capacitive sensor of the present invention has a noise level controlled by the impedance of the sensor. This allows for a signal to noise ratio of a capacitive transducer of the present invention that exceeds that of a strain gauge by more than 10 times. It is believed this difference will be increased by improving the thermal stability of the present sensors or compensating for such thermal variations which result in base line drift.

The sensor element of the present invention comprises first and second, serially connected variable capacitors which may be readily fabricated using conventional printed circuit etching techniques. More specifically, the sensor comprises a stacked configuration of five substrates.

The two outermost substrates, or first and fifth substrates, have a metalized surface on each side thereof. A portion of the metal surface on the inner side of the outer most plates each comprise the first plates (drive plates) of a different variable capacitor. The first substrate further includes a hole or passage therethrough for receiving means for transmitting force to the pickup plate (from a sample holder, for example) without contacting or being frictionally restrained from movement therethrough. The pick-up plate is described more fully below. The fifth substrate further includes an area directly opposite and conforming to the size of the hole or passage in the first substrate in which the metalized surface is etched therefrom on the inner surface, This is done to maintain linearity of response of the sensor. The metalized surfaces of the outer side of the first and fifth substrates act as shields, in known manner.

The first and fifth or outer substrates each abut the second and fourth substrates, respectively, which comprise insulating substrates or frame members having an open central portion at least as large as a central plate of the third substrate described below.

The third substrate is sandwiched between these two insulating frame members. A portion of the third substrate comprises a common second plate or pick-up plate for the pair of variable capacitors defined by the first and fifth substrates. The third substrate includes a planar central plate which is suspended by spring-like members. In preferred embodiments, the spring-like members include four relatively thin L-shaped springs. The metal mass is thus displaceable within the frame openings when the five substrates are sandwiched together.

The means for transmitting force to the central plate, for example sample holder or pedestal, passes through the first and second substrate without contact, while abutting, contacting or attaching to the suspended metal mass proximate it center. In this way, forces applied to the sample holder or pedestal are translated to displacement of the suspended metal mass.

Electrical connections to various layers of substrates in the construction outlined above can be made by conductive pins inserted through metalized holes made using conventional plate through hole techniques common to multi-layered printed circuit assemblies.

Means for applying an alternating current carrier signal to the pair of drive plates is provided. An alternating current signal from a high frequency oscillator is impressed across the terminals associated with the first and fifth substrates or two outer most stationary plates of the transducer and the central displaceable plate (pick-up plate) provides an output. As such, a push-pull signal proportional to the amount of deflection of the central moveable plate is developed and subsequently amplified, and then synchronously demodulated by means for monitoring an output signal. A DC voltage signal which is proportional to force, weight or displacement can be produced.

For a better understanding of the invention, its advantages, and the object obtained by its use, reference should be made to the drawing and to the accompanying descriptive matter in which there are illustrated and described preferred embodiments of the present invention.

Brief Description of the Drawings

The single figure depicts an exploded view of a capacitive sensor element in accordance with the present invention.

Detailed Description of the Preferred Embodiments

Detailed embodiments of the present invention are described herein. However, it is to be understood that the disclosed embodiments are merely exemplary of the present invention which may be embodied in various systems. Therefore, specific details disclosed herein are not to be interpreted as limiting, but rather as a basis for the claims and as a representative basis for teaching one of skill in the art to variously practice the invention.

The force (including weight) or position indicating device of the present invention generally has three components. The first component is a sensor element, which is a multi-plate capacitor system. A second component is means for inputting an AC carrier signal, while the third component is means for monitoring the sensor element output, preferably converting the output from the sensor to a DC signal proportional to force, weight or displacement.

Referring now to the figure, an exploded view of the components of the sensor element 2 of the present invention, is depicted. Functionally, the sensor element comprises two transducers 4, 6, which function as two variable capacitors connected in series and forming a capacitive voltage divider. The overall sensor element 2 includes five substrate layers 8, 10, 16, 14, 12 sandwiched together to form the transducers. The sensor element 2 can be fabricated using well-known printed circuit etching technology.

The first substrate layer 8 and the fifth substrate layer 12 include the drive plates or fixed plates of the transducers and are driven with a carrier signal. The carrier signal can be an AC signal on the order of 50 KHz, with the signal to these outer most substrate layers 8, 12, being 180 degrees out of phase with each other.

The outer exposed surfaces of first substrate 8 and fifth substrate 12 are covered with metalization, for example, copper. This metal layer functions as a shield against EMI noise. On the inner surface of first substrate 8 and fifth substrate 12, a metalized pattern 30 is provided. This metalized pattern forms the drive plate on each substrate. The metalized pattern on the interior surface of first substrate 8 generally corresponds to that on fifth substrate 12. As depicted in the figure, the metalized pattern 30 or drive plate on the inside of the fifth substrate 12 can include a generally rectangular frame pattern 31. Extending around the periphery of the substrate metalized pattern 31 is a channel defining an unmetalized opening 32. Centrally disposed in this unmetalized opening 32 is the rectangular metalized pattern 31 of conductive material, having a conductive lead 33 leading to a conductive terminal portion 34.

The metalization on the inside surface of the first substrate 8 is similar to that of the inside surface of fifth substrate 12 with two exceptions. The first difference is that the terminal portions of each substrate 34, 36 are offset from one another, rather than being vertically aligned when the sensor element 2 is assembled. The second difference is the provision of a through hole 22 centrally disposed through the thickness of the first substrate 8. The through hole 22 is disposed centrally for receiving a sample holder 27 or other means for transmitting force therethrough, which is described in further detail below.

The inside surface of the fifth substrate 12 includes a demetalized or etched portion 38 which corresponds to the through hole 22. The provision of the demetalized or etched portion 38 generally corresponding to the through hole 22 provides for the rectangular metalized pattern 30 of conductive material on each of the first substrate 8 and fifth substrate 12 inside layers to be mirror images of one another. This provision is necessary to provide a linear response from the pair of capacitive transducers 4, 6.

The outer layers of the sensor element 2 or first substrate 8 and fifth substrate 12 can be manufactured from standard circuit board materials, such as 1.6 mm (1/16") glass epoxy with copper on both sides. In order to reduce labor requirements, a large number of the outer layer substrates may be manufactured at one time. For example, a 153 mm (6") sheet of material may be utilized to manufacture about 100 substrate layers of 13mm (1/2") square dimensions. The pattern for the metalized portion 30 of the first substrate 8 and fifth substrate 12 may be first etched in the copper. The substrate may be routed around the individual devices within a large sheet of material, leaving only thin tabs of materials to hold them together. These tabs allow the devices to be snapped apart after assembly.

The second substrate layer 10 and the fourth substrate layer 14 comprise spacer layers. As depicted in the figure, these layers 10, 14 may be of generally rectangular shape and have a generally rectangular opening formed centrally therein, with the opening extending completely through the substrate. The spacer layers, second substrate 10 and fourth substrate 14, must be insulators or covered with an insulating coating. The opening through the insulators 10, 14 is equal to or greater than the dimensions of a central plate 20 on a third substrate 16 described below, and an associated appropriate suspension system 18, also described below.

The second substrate 10 and fourth substrate 14 can be manufactured from etched metal with an insulating coating on both sides. This insulating coating could be an epoxy, or other organic coating such as those used on enameled magnet wire, but it is believed that best results are achieved by using aluminum for the spacer and anodizing it to form an insulating coating of aluminum oxide.

It is believed that the insulating spacers, second substrate layer 10 and fourth substrate layer 14, can be etched first and then anodized, or anodized first and then etched, depending upon the type of photoresist chemicals used. A preferred method is to use aluminum sheet stock purchased with a thin 0.03mm (0.0012") anodized layer on both sides. This anodized layer provides good adhesion with the positive type liquid photoresist which can be used to fabricate the other layers of the sensor element 2. With bare aluminum, the resist tends to peel away at the edges being etched making it hard to maintain desired dimensions.

After etching, the photoresist and original anodizing are removed and the parts are anodized to the desired insulation thickness. Although it is believed 0,013 mm (0.0005") or less of an anodized thickness layer will provide the required electrical isolation, it is desirable to make the thickness as great as possible to minimize the capacitance between the outer layer shields, first substrate layer 8 and fifth substrate layer 12, and a center plate, third substrate layer 16, described below.

The third substrate layer 16 is sandwiched between the insulating layers, second substrate layer 10 and fourth substrate layer 14. The third substrate layer 16 includes the pick-up plate which is common to the pair of transducers 4, 6. A central plate 20 is mounted on an appropriate suspension system 18 to provide for desired relative motion of the central plate 20 or pick-up plate on third substrate layer 16. The third or central substrate layer 16 can be an etched metal layer supported by a suspension system 18 defined by a pattern of slits 19. The central plate 20 is thus a solid portion or mass suspended by the surrounding framework of a suspension system 18. The third substrate layer further includes a terminal 17 for electrical connection. A preferred metal for use as a central plate is a beryllium-copper alloy.

Although a pattern of four L-shaped slits 19 are depicted in the figure, it is believed that other patterns may be utilized to provide the same type of spring supporting structure for central plate 20. Further, it is recognized that varying effective spring constants may be achieved for the centrally supported mass or central plate 20 by altering the thickness of the materials of this substrate and the size of the spring elements. Thus, the overall range of travel per unit force exerted on the central plate 20 of the third substrate layer 16 may be varied by design. Thus, sensors of varying overall range may be manufactured.

When the five substrate layers 8, 10, 16, 14 and 12 are assembled together, the central plate 20 of the third substrate layer 16 is centrally disposed within the openings formed in the insulating substrates, second substrate layer 10 and fourth substrate layer 14, and thus, the central plate 20 is free to deflect relative to the first substrate layer 8 and fifth substrate layer 12.

The layers may be assembled together by hand, holding them together with pins inserted around the entire perimeter of the substrates and soldered to the outside layers. When assembled, selected electrical connections between the various internal layers or substrates can readily be provided as disclosed by Bonin et al. in U.S. Patent No. 4,694,687.

Means for transmitting force 24 from a point remote from the central plate 20 to the central plate 20 are provided. This means can include a sample holder 27, which functions to transmit the force created by the weight of a sample to the central plate 20 of the third substrate layer 16. In a preferred embodiment, the sample holder 27 is a pedestal which includes a sample holding surface 26 and a stem portion 28. The stem portion 28 extends through the through hole 22 in the first substrate layer 8 and through the opening in the second substrate layer 10. The bottom surface 29 of the stem portion 28 contacts the upper surface of the central plate 20 at a central point 23 when the sensor is assembled. The space between the stem portion 28 and wall of the through hole 22 is preferably sealed from contamination by a diaphragm seal or other sealing means which prevents entry of dirt while not impeding movement of the pedestal or other means 27 for transmitting force.

Thus, functionally, the weight or force exerted by a sample or other means on the sample holding surface 26 of the sample holder 27 is transmitted to the central plate 20 of the third substrate layer 16 and results in deflection of the central plate 20 commensurate with the force exerted on the surface of the sample holder 27. Thus, the central plate 20, under force, moves closer toward or further away from one or the other of the outer most substrates, first substrate layer 8 and fifth substrate layer 12. Of course, the sample holder 27 may be directly connected to a moving, or force imparting, element without positioning a "load" on the surface 26. Indeed, the surface 26 may be replaced by a connector adapted for this purpose.

Means 40 for providing a carrier signal to the outer most plates or first substrate layer 8 and fifth substrate layer 12 are provided. This signal can be an AC signal. Such means may include an oscillator which produces a 50 KHz alternating current signal. The signal to each outer most plate is preferably 180 degrees out of phase with the signal provided to the other outer most plate.

Means 42 are also provided for reading the output from the sensor element 2, and converting the output to a signal proportional to force, weight or displacement of the central plate 20. The output signal is generally run through a buffer amplifier of very high input impedance (100 MOHM-0.3 pF), and then synchronously demodulated to produce a DC signal. The DC signal is proportional to the force, weight or displacement of the central plate 20. The output would be positive for one direction of displacement, and negative for the opposite direction. It is recognized that the sample holder 27 or means for transmitting force is attached or in contact with the central plates 20 to move in unison with such central plate 20. The output of the sensor 2 is actually proportional to the central plate 20 position, but can easily be calibrated to represent force (including weight) since the sensor has a linear force versus displacement relationship.

It is recognized that the sample holder 27 or means for transmitting force must be manufactured from an insulating material or covered with an insulating material. Further, the clearance between the inside diameter of through hole 22 and the outside diameter of stem portion 28 must be sufficient to avoid any frictional effects which may reduce the sensitivity of the sensor element 2.

The signal to noise ratio of the capacitive transducers of the present invention are much better than that of presently used metal strain gauge transducers. The minimum noise level of the strain gauge transducer is determined by the thermal noise of the strain gauge resistive element. This noise is proportional to the square root of the resistance. The output signal is proportional to the input signal, but is only a very small fraction of it. A typical value taken from a commercial scale strain gauge transducer is 175 Ohm resistance at full scale output of 5 millivolts.

The three-plate capacitive transducer of the present invention does not generate noise as a resistive transducer does, but the signal cannot be used without connecting it to an amplifier, and the amplifier must have a very high input resistance, so the amplifier will generate noise. The lower limit of this noise will be determined by the effective input impedance of the amplifier. Since the capacitive transducer is in parallel with the amplifier input impedance, and the amplifier input impedance is much larger than the impedance of the transducer (or the output will be very non-linear), the effective input impedance is equal to that of the transducer.

The impedance of the transducer is determined by the capacitance and operating frequency. Higher operating frequency dives lower transducer impedance ($X_c$=1/6.28FC ). The capacitance is about 10 pF for the 13mm (1/2") square device with 0.13 mm (0,005") spacing between plates. The operating frequency can be any convenient value, limited only by the frequency response of the amplifier and associated circuitry. The full scale output signal of the transducer is equal to the input voltage, which will be conservatively taken as 10 volts. The full scale output of the capacitive transducer is 10V, which is 2,000 times greater than the strain gauge transducer (5mV). The impedance, and therefore the noise generated, is greater with the capacitive transducer (except at very high frequencies which would require rather expensive components), but due to the much higher inherent output level, the signal to noise ratio of the capacitive transducer is significantly better.

The following table shows the relationship of signal to noise ratio for the two transducers.

Table 1

| Fop = operating frequency of capacitive transducer |
|---|
| C = capacitance of transducer = 10pF |
| $X_c$ = impedance of transducer = 1/(6.28 x Fop x C) |
| R = resistance of strain gauge = 175 Ohm |
| Since noise is proportional to the square root of R or $X_c$, the ratio of capacitive transducer noise to strain gauge noise is the square root of ($X_c$/R), and the factor of improvement of SNR of capacitive vs strain gauge is 2000 divided by the square root of ($X_c$/R). |

| Fop | Xc/R | square root Xc/R | 2000/sq root (Xc/R) |
|---|---|---|---|
| 10KHz | 11,400 | 107 | 19 |
| 100KHz | 1,140 | 34 | 59 |
| 1MHz | 114 | 11 | 190 |
| 10MHz | 11.4 | 3.4 | 590 |
| 100MHz | 1.14 | 1.1 | 1900 |
| | | | Capacitive transducer SNR is better than strain gauge by factor in above column. |

As is readily apparent from the above table, the capacitive transducer sensor of the present invention is far superior to strain gauges on the basis of electronic noise.

Since the output of the capacitive transducer or sensor element 2 is proportional to the displacement of the center mass portion 20 or electrode, it is recognized that a device for use as a scale or as a measure of displacement may be manufactured. It is first necessary to choose an appropriate stiffness for the suspension system 18 supporting the central plate 20 so that the sample holder 27 or means for transmitting force is forced reliably against the surface to be measured without exerting excessive force that would deflect the object and change its actual position. Secondly, it is recognized that the insulating spacers, second substrate layer 10 and fourth substrate layer 14, may be manufactured of different thicknesses to offset the center plate sufficiently. This would alter the operational range of the device. With resolution of one part in 100,000, it is believed that such sensors can resolve displacements down to 25 angstoms (0.1 microinches) or better.

**Claims**

1.  A high resolution sensor element for detecting force, weight or displacement, comprising:

    a. a pair of capacitive transducers (4,6), each transducer including a separate drive plate (31), and a shared pickup plate (20), said pickup plate (20) being positioned between said separate drive plates (31) and separated from each drive plate (31) by an insulating spacer (10,14) said drive plates (31) having spaced opposing conductive surfaces when said pickup plate (20) is mounted therebetween, said pickup plate (20) further including a conductive central plate (20) suspended by spring means (18,19) between said drive plates (31), wherein said central plate (20) is capable of deflection between the conductive surfaces of each of said drive plates (31); and
    b. means (27) for transmitting force from a point remote from said central plate (20) to a central portion (23) of said central plate (20)

    the sensor element being **characterised in that** the first (31) of said drive plates has a hole (22) centrally disposed therethrough, and the means (27) for transmitting force includes a non-conductive stem (28) passing through said centrally disposed hole (22) in said first of said drive plates (31) and in contact with the central plate (20) of said pickup plate (20) approximately at said central portion (23) of said central plate (20).

2.  The sensor element of claim 1, characterised in that said means (27) for transmitting force includes a non-conductive pedestral (26) being mounted to said stem (28), wherein said means (27) for transmitting force transmits a force applied to said pedestal (26) to said central plate (20) with resulting deflection of said central plate (20) as it is suspended.

3. The sensor element according to claim 1 or 2, characterised in that the sensor element has a stacked configuration of at least five generally planar substrate layers, wherein:

   a. said first drive plate (31) is formed by a first substrate layer (8) having a metalized inner and a metalized outer surface, said metalized outer surface defining a first exterior surface of said sensor element and said metalized inner surface including a first plate of a first variable capacitor of the pair of capacitive transducers (4,6);

   b. a first of said insulating spacers (10,14) is formed by a second substrate layer (10) including an insulating layer, said second substrate layer (10) having an open central portion, said second substrate layer (10) further having a first and second surface, said first surface being mounted in planar contact with said inner surface of said first substrate layer (8);

   c. said pickup plate (20) is formed by a third substrate layer having a first and second surface, said first surface being mounted in planar contact with said second surface of said second substrate layer (10), said third substrate layer being made from a conducting material and including said central plate (20) which is suspended by spring means (18,19);

   d. a second of said insulating spacers (10,14) is formed by a fourth substrate layer (14) including an insulating layer, said fourth substrate layer (14) having an open central portion, said fourth substrate layer (14) having a first and second surface, said first surface being mounted in planar contact with said second surface of said third substrate layer; and

   e. the second of said drive plates (31) is formed by a fifth substrate layer (12) having a metalized inner and a metalized outer surface, said metalized outer surface defining a second exterior surface of said sensor element and said metalized inner surface forming a first plate of a second variable capacitor of the pair of capacitive transducers (4,6), said inner surface of said fifth substrate layer (12) being mounted in planar contact with said second surface of said fourth substrate layer (14).

4. The sensor element of claim 3, characterised in that said insulating spacers (10,14) formed by the second and fourth substrate layers are made from aluminum having an anodized surface to form an insulating layer.

5. The sensor element of claim 3, characterised in that said drive plates (31) formed by the first and fifth substrate layers are made from circuit board material including a glass epoxy inner substrate having a copper layer covering both sides.

6. The sensor element of claim 5, characterised in that said spaced opposing conductive surface of said drive plates (31) each have a generally rectangular metalized pattern disposed centrally thereon with an unmetalized perimeter, said metalized patterns being coincidentally aligned.

7. The sensor element of claim 6, further characterised by an unmetalized portion (38) on the opposing conductive surface of said second drive plate (31) approximating the size and shape of said hole (22) in said first drive plate (31) and aligned with said hole (22).

8. The sensor element of claim 1 or 2, wherein the pickup plate (20) includes an etched metal layer supported by a suspension system (18) defined by a pattern of slits (19) cut through said etched metal layer.

9. A high resolution sensor unit for detecting the force between a probe of a scanned-probe microscope and a sample, said sensor unit comprising:

   a. a sensor element according to any preceding claim;

   b. means (40) for applying an alternating current carrier signal to said pair of drive plates (31), wherein the signal to one of said drive plates is 180 degrees out of phase with the signal to the other of said drive plates; and

   c. means (42) for monitoring an output signal from said pickup plate (20), wherein said monitoring means (42) synchronously demodulates said output signal to produce a direct current signal proportional to said force applied to said pedestal (26).

**Patentansprüche**

1. Hochauflösendes Sensorelement zur Detektion von Kraft, Gewicht oder Verdrängung, das folgendes umfaßt:

EP 0 721 564 B1

a. ein Paar kapazitiver Wandler (4, 6), wobei jeder Wandler eine separate Ansteuerplatte (31) und eine gemeinsame Aufnehmerplatte (20) hat, wobei die genannte Aufnehmerplatte zwischen den genannten separaten Ansteuerplatten (31) angeordnet ist und durch eine isolierende Abstandsplatte (10, 14) von jeder Ansteuerplatte (31) getrennt ist, wobei die genannten Ansteuerplatten (31) beabstandete, einander gegenüberliegende leitende Oberflächen haben, wenn die genannte Aufnehmerplatte (20) dazwischen angeordnet ist, wobei die genannte Aufnehmerplatte (20) des weiteren eine leitende zentrale Platte (20) aufweist, die mit Federelementen (18, 19) zwischen den genannten Ansteuerplatten (31) aufgehängt ist, wobei die genannte zentrale Platte (20) zwischen den leitenden Oberflächen jeder der genannten Ansteuerplatten (31) ablenkungsfähig ist, und

b. eine Vorrichtung (27) zum Übertragen von Kraft von einem Punkt, der von der genannten zentralen Platte (20) abgesetzt ist, auf einen Mittelteil (23) der genannten zentralen Platte (20),

wobei das genannte Sensorelement dadurch gekennzeichnet ist, daß die erste der genannten Ansteuerplatten (31) ein mittig durch sie hindurch angeordnetes Loch (22) hat und die Vorrichtung (27) zum Übertragen von Kraft einen nichtleitenden Schaft (28) aufweist, der durch das genannte mittig angeordnete Loch (22) in der genannten ersten der genannten Ansteuerplatten (31) hindurch geht und mit der zentralen Platte (20) der genannten Aufnehmerplatte ungefähr an dem genannten Mittelteil (23) der genannten zentralen Platte (20) in Kontakt ist.

2. Sensorelement nach Anspruch 1, dadurch gekennzeichnet, daß die genannte Vorrichtung (27) zum Übertragen von Kraft einen nichtleitenden Sockel (26) aufweist, der an dem genannten Schaft (28) angebracht ist, wobei die genannte Vorrichtung (27) zum Übertragen von Kraft eine auf den genannten Sockel (26) ausgeübte Kraft auf die genannte zentrale Platte ((20) überträgt mit resultierender Ablenkung der genannten zentralen Platte (20), da sie aufgehängt ist.

3. Sensorelement nach Anspruch 1 oder Anspruch 2, dadurch gekennzeichnet, daß das Sensorelement eine gestapelte Konfiguration aus wenigstens fünf allgemein ebenen Substratschichten hat, wobei:

a. die genannte erste Ansteuerplatte (31) von einer ersten Substratschicht (8) mit einer metallisierten inneren und einer metallisierten äußeren Oberfläche gebildet wird, wobei die genannte metallisierte äußere Oberfläche eine erste Außenseite des genannten Sensorelements definiert und die genannte metallisierte innere Oberfläche eine erste Platte eines ersten variablen Kondensators des Paares kapazitiver Wandler (4, 6) aufweist;

b. eine erste der genannten isolierenden Abstandsplatten (10, 14) von einer zweiten Substratschicht (10) mit einer isolierenden Schicht gebildet wird, wobei die genannte zweite Substratschicht (10) einen offenen Mittelteil hat, wobei die genannte zweite Substratschicht (10) des weiteren eine erste und eine zweite Oberfläche hat, wobei die genannte erste Oberfläche in ebenem Kontakt mit der genannten inneren Oberfläche der genannten ersten Substratschicht (8) angebracht ist;

c. die genannte Aufnehmerplatte (16) von einer dritten Substratschicht mit einer ersten und einer zweiten Oberfläche gebildet wird, wobei die genannte erste Oberfläche in ebenem Kontakt mit der genannten zweiten Oberfläche der genannten zweiten Substratschicht (10) angebracht ist, wobei die genannte dritte Substratschicht aus einem leitenden Material hergestellt ist und die genannte zentrale Platte (20) aufweist, die mit Federelementen (18, 19) aufgehängt ist;

d. eine zweite der genannten isolierenden Abstandsplatten (10, 14) von einer vierten Substratschicht (14) mit einer Isolationsschicht gebildet wird, wobei die genannte vierte Substratschicht (14) einen offenen Mittelteil hat, wobei die genannte vierte Substratschicht (14) eine erste und eine zweite Oberfläche hat, wobei die genannte erste Oberfläche in ebenem Kontakt mit der genannten zweiten Oberfläche der genannten dritten Substratschicht angeordnet ist, und

e. die zweite der genannten Ansteuerplatten (31) von einer fünften Substratschicht mit einer metallisierten inneren und einer metallisierten äußeren Oberfläche gebildet wird, wobei die genannte metallisierte äußere Oberfläche eine zweite Außenseite des genannten Sensorelements definiert und die genannte metallisierte innere Oberfläche eine erste Platte eines zweiten variablen Kondensators des Paares kapazitiver Wandler (4, 6) bildet, wobei die genannte innere Oberfläche der genannten fünften Substratschicht (12) in ebenem Konakt mit der genannten zweiten Oberfläche der genannten vierten Substratschicht (14) angeordnet ist.

4. Sensorelement nach Anspruch 3, dadurch gekennzeichnet, daß die genannten isolierenden Abstandsplatten (10, 14), die von der zweiten und der vierten Substratschicht gebildet werden, aus Aluminium mit einer eloxierten Oberfläche zum Bilden einer Isolationsschicht sind.

9

**5.** Sensorelement nach Anspruch 3, dadurch gekennzeichnet, daß die genannten Ansteuerplatten (31), die von der ersten und der fünften Substratschicht (8, 12) gebildet werden, aus Leiterplattenmaterial sind, das ein inneres Glasepoxidsubstrat mit einer beide Seiten bedeckenden Kupferschicht aufweist.

**6.** Sensorelement nach Anspruch 5, dadurch gekennzeichnet, daß auf der genannten beabstandeten, gegenüberliegenden, leitenden Oberfläche der genannten Ansteuerplatten (31) jeweils ein allgemein rechtwinkliges metallisiertes Muster mit einem nichtmetallisierten Rand mittig angeordnet ist, wobei die metallisierten Muster miteinander übereinstimmend ausgerichtet sind.

**7.** Sensorelement nach Anspruch 6, des weiteren gekennzeichnet durch einen sich der Größe und Form des genannten Loches (22) in der genannten ersten Ansteuerplatte (31) annähernden und auf das genannte Loch (22) ausgerichteten nichtmetallisierten Teil (38) auf der gegenüberliegenden leitenden Oberfläche der genannten zweiten Ansteuerplatte (31).

**8.** Sensorelement nach Anspruch 1 oder Anspruch 2, bei dem die Aufnehmerplatte (20) eine geätzte Metallschicht aufweist, die von einem Aufhängungssystem (18) getragen wird, das durch ein Muster von in die genannte geätzte Metallschicht eingearbeiteten Schlitzen (19) definiert wird.

**9.** Hochauflösende Sensoreinheit zur Detektion der Kraft zwischen einer Sonde eines Rastersondenmikroskops und einer Probe, wobei die genannte Sensoreinheit folgendes umfaßt:

  a. ein Sensorelement nach einem der vorangehenden Ansprüche,
  b. eine Einrichtung (40) zum Anlegen eines Wechselstromträgersignals an das genannte Paar Ansteuerplatten (31), wobei das Signal zu einer der genannten Ansteuerplatten im Verhältnis zu dem Signal zu der anderen der genannten Ansteuerplatten 180 Grad phasenverschoben ist, und
  c. eine Einrichtung (42) zum Überwachen eines Ausgangssignals von der genannten Aufnehmerplatte (20), wobei die genannte Überwachungseinrichtung (42) das genannte Ausgangssignal synchron demoduliert, um ein zu der genannten Kraft, die auf den genannten Sockel (26) ausgeübt wird, proportionales Gleichstromsignal zu erzeugen.

## Revendications

**1.** Elément de capteur de haute résolution pour détecter une force, un poids ou un déplacement, comprenant :

  a. une paire de transducteurs capacitifs (4,6), chaque transducteur comportant une plaque d'attaque séparée (30) et une plaque de captation partagée (20), ladite plaque de captation (20) étant positionnée entre lesdites plaques d'attaque séparées (30) et séparée de chaque plaque d'attaque (30) par une entretoise isolante (10,14), lesdites plaques d'attaque (30) ayant des surfaces conductrices opposées espacées quand ladite plaque de captation (20) est montée entre elles, ladite plaque de captation (20) comportant en outre une plaque centrale conductrice (20) suspendue par des moyens de ressort (18,19) entre lesdites plaques d'attaque (30), dans lequel ladite plaque centrale (20) est capable de dévier entre les surfaces conductrices de chacune desdites plaques d'attaque (30) ; et
  b. un moyen (27) pour transmettre une force depuis un point distant par rapport à ladite plaque centrale (20) à une partie centrale (23) de ladite plaque centrale (20) ;

  l'élément de capteur étant caractérisé en ce que la première desdites plaques d'attaque (30) comporte un trou (22) disposé centralement à travers elle, et le moyen (27) pour transmettre une force comporte une tige non conductrice (28) passant à travers ledit trou disposé centralement (22) dans ladite première desdites plaques d'attaque (30) et en contact avec la plaque centrale (20) de ladite plaque de captation approximativement au niveau de ladite partie centrale (23) de ladite plaque centrale (20).

**2.** Elément de capteur selon la revendication 1, caractérisé en ce que ledit moyen (27) pour transmettre une force comporte un socle non conducteur (26) monté sur ladite tige (28), dans lequel ledit moyen (27) pour transmettre une force transmet une force appliquée audit socle (26) à ladite plaque centrale (20) avec une déviation résultante de ladite plaque centrale (20) quand elle est suspendue.

**3.** Elément de capteur selon la revendication 1 ou 2, caractérisé en ce que l'élément de capteur a une configuration empilée d'au moins cinq couches de substrat généralement planes, dans lequel :

a. ladite première plaque d'attaque (30) est formée par une première couche de substrat (8) ayant une surface interne métallisée et une surface externe métallisée, ladite surface externe métallisée définissant une première surface extérieure dudit élément capteur et ladite surface interne métallisée comportant une première plaque d'un premier condensateur variable de la paire de transducteurs capacitifs (4,6) ;

b. une première desdites entretoises isolantes (10,14) est formée par une deuxième couche de substrat (10) comportant une couche isolante, ladite deuxième couche de substrat (10) ayant une partie centrale ouverte, ladite deuxième couche de substrat (10) ayant en outre une première et une deuxième surface, ladite première surface étant montée en contact plan avec ladite surface interne de ladite première couche de substrat (8)

c. ladite plaque de captation (16) est formée par une troisième couche de substrat ayant une première et une deuxième surface, ladite première surface étant montée en contact plan avec ladite deuxième surface de ladite deuxième couche de substrat (10), ladite troisième couche de substrat étant réalisée à partir d'une matière conductrice et comportant ladite plaque centrale (20) qui est suspendue par des moyens de ressort (18,19) ;

d. une deuxième desdites entretoises isolantes (10,14) est formée par une quatrième couche de substrat (14) comportant une couche isolante, ladite quatrième couche de substrat (14) ayant une partie centrale ouverte, ladite quatrième couche de substrat (14) ayant une première et une deuxième surface, ladite première surface étant montée en contact plan avec ladite deuxième surface de ladite troisième couche de substrat ; et

e. la deuxième desdites plaques d'attaque (30) est formée par une cinquième couche de substrat (12) ayant une surface interne métallisée et une surface externe métallisée, ladite surface externe métallisée définissant une deuxième surface extérieure dudit élément de capteur et ladite surface interne métallisée formant une première plaque d'un deuxième condensateur variable de la paire de transducteurs capacitifs (4,6), ladite surface interne de ladite cinquième couche de substrat (12) étant montée en contact plan avec ladite deuxième surface de ladite quatrième couche de substrat (14).

4. Elément de capteur selon la revendication 3, caractérisé en ce que lesdites entretoises isolantes (10,14) formées par les deuxième et quatrième couches de substrat sont réalisées en aluminium ayant une surface anodisée en vue de former une couche isolante.

5. Elément de capteur selon la revendication 3, caractérisé en ce que lesdites plaques d'attaque (30) formées par lesdites première et cinquième couches de substrat (8,12) sont réalisée à partir de la matière de carte de circuit comportant un substrat interne en époxy de verre ayant une couche de cuivre couvrant les deux côtés.

6. Elément de capteur selon la revendication 5, caractérisé en ce que lesdites surfaces conductrices opposées espacées desdites plaques d'attaque (30) ont chacune une configuration métallisée généralement rectangulaire disposée centralement sur celles-ci avec un périmètre non métallisé, lesdites configurations métallisées étant alignées de manière à coïncider.

7. Elément de capteur selon la revendication 6, caractérisé en outre par une partie non métallisée (38) sur la surface conductrice opposée de ladite deuxième plaque d'attaque (30), approximant la taille et la forme dudit trou (22) dans ladite première plaque d'attaque (30) et alignée avec ledit trou (22).

8. Elément de capteur selon la revendication 1 ou 2, dans lequel la plaque de captation (20) comporte une couche métallique gravée supportée par un système de suspension (18) défini par une configuration de fentes (19) coupées à travers ladite couche métallique gravée.

9. Unité de capteur de haute résolution pour détecter la force entre une sonde d'un microscope à sonde animée d'un mouvement de balayage et un échantillon, ladite unité de capteur comprenant :

a. un élément de capteur selon l'une quelconque des revendications précédentes ;

b. un moyen (40) pour appliquer un signal porteur de courant alternatif à ladite paire de plaques d'attaque (30) dans lequel le signal allant à l'une desdites plaques d'attaque est déphasé de 180 degrés par rapport au signal allant à l'autre desdites plaques d'attaque ; et un moyen (42) pour contrôler un signal de sortie de ladite plaque d'attaque (20), dans lequel ledit moyen de contrôle (42) démodule de manière synchrone ledit signal de sortie en vue de produire un signal de courant continu proportionnel à ladite force appliquée audit socle (26).